(19) **Europäisches Patentamt**
**European Patent Office**
**Office européen des brevets**

(11) **EP 4 521 973 B1**

(12) **EUROPEAN PATENT SPECIFICATION**

(45) Date of publication and mention
of the grant of the patent:
**29.04.2026 Bulletin 2026/18**

(21) Application number: **23726636.6**

(22) Date of filing: **08.05.2023**

(51) International Patent Classification (IPC):
**A24F 40/51** *(2020.01)*

(52) Cooperative Patent Classification (CPC):
**A24F 40/51; A24F 40/20**

(86) International application number:
**PCT/IB2023/054763**

(87) International publication number:
**WO 2023/218326 (16.11.2023 Gazette 2023/46)**

(54) **COLOUR DIFFERENTIATION FOR AEROSOL-GENERATING DEVICES AND SYSTEMS**

FARBDIFFERENZIERUNG FÜR AEROSOLERZEUGENDE VORRICHTUNGEN UND SYSTEME

DIFFÉRENCIATION DE COULEUR POUR DISPOSITIFS ET SYSTÈMES DE GÉNÉRATION D'AÉROSOL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.05.2022 EP 22173081**

(43) Date of publication of application:
**19.03.2025 Bulletin 2025/12**

(73) Proprietor: **Philip Morris Products S.A.
2000 Neuchâtel (CH)**

(72) Inventors:
• **CHEUNG, Yiu Chi
Kowloon (HK)**
• **GUBIAN, Sylvain
2000 Neuchâtel (CH)**
• **STAN, Adrian
2000 Neuchâtel (CH)**

(74) Representative: **Reddie & Grose LLP
The White Chapel Building
10 Whitechapel High Street
London E1 8QS (GB)**

(56) References cited:
**EP-A1- 3 545 780          WO-A1-2020/194112
WO-A1-2021/261815**

**Description**

The present disclosure relates to aerosol-generating devices and systems. In particular, the invention relates to light emission and colour differentiation of aerosol-generating devices and systems.

Existing aerosol-generating devices and systems generally do not include a light source. Such devices and systems, including chargers or holders, may blend in with the surrounding environment. Accordingly, when users place an aerosol-generating device or system on a table or counter after use, such devices may go unnoticed and can be easily forgotten. Additionally, when used in a social setting, such devices may be confused with the devices or systems of other users because the colour of the aerosol-generating device, charger, or holder is close to that of the other devices or to the environment where they are placed.

WO 2020/194112 A1 describes an aerosol-generating system including a charging unit, which includes a cover and main charging unit, an aerosol-generating device, an optical sensor, and a controller that is operably coupled to the optical sensor. The optical sensor may be a chromatic sensor and includes a light sensitive sensor. The aerosol-generating device includes a main tobacco stick holder and a cover defining the housing of the device. A light-emitting diode is provided along the main tobacco stick holder and provides status indications, which may be color coded. The controller is configured to manipulate one or more operating parameters of an aerosolizer element of the aerosol-generating system based on the optical sensor data.

It would be desirable to provide a means or improvement to aerosol-generating devices and systems that allows such devices and systems to differentiate themselves from the surrounding environment. Furthermore, it would be desirable that such means or improvement also allow aerosol-generating devices and systems to differentiate themselves from other aerosol-generating devices and systems. It would also be desirable to allow users interact with and personalize aerosol-generating devices and systems to enhance user experience and engagement.

According to an aspect of the present invention, there is provided an aerosol-generating device. The aerosol-generating device comprises a housing, an airflow channel, a heating element, one or more optical sensors, one or more light-emitting elements, and a controller. The housing has a mouthpiece element and an air inlet. The airflow channel extends within the housing between the mouthpiece element and the air inlet. The heating element is fixed within the housing. The one or more optical sensors are disposed in the housing to detect a colour of ambient light in an environment surrounding the aerosol-generating device and provide a signal indicative of the colour of ambient light. The one or more light-emitting elements disposed on or in the housing to emit light. The controller comprises one or more processors operatively coupled to the one or more optical sensors and the one or more light-emitting elements. The controller is configured to receive the signal indicative of the colour of ambient light from the one or more optical sensors, determine an ambient colour value corresponding to the colour of ambient light based on the signal indicative of the colour of ambient light, generate a plurality of generated colour values, determine a colour distance between the ambient light value and each of the plurality of generated colour values to provide a plurality of colour distances, select one of the plurality of generated colour values based on the plurality of colour distances, and cause the one or more light-emitting elements to emit light having a colour corresponding to the selected one of the plurality of generated colour values.

Advantageously, the aerosol-generating device including the one or more optical sensors and one or more light-emitting elements allows the aerosol-generating device to differentiate itself from the environment surrounding the aerosol-generating device. By detecting the colour of ambient light in the environment surrounding the aerosol-generating device and emitting light with a colour based on the colour distance from the colour of ambient light, the aerosol-generating device can provide a greater contrast between itself and the surrounding environment. Additionally, the aerosol-generating device may display messages that have increased clarity due to the greater contrast with the surrounding environment.

The controller may be configured to randomly generate each of the plurality of generated colour values. To randomly generate colour values, the controller may be configured to use one or more of a pseudorandom number generator, a random number generator, an entropy source, a hardware random number generator, a digital random number generator, or other software or hardware for generating random numbers. The controller may be configured to generate each of the plurality of generated colour values within a predetermined colour space. For example, the predetermined colour space may be a red, green, and blue (RGB) colour space. In general, the controller may be configured to generate colour values within any suitable colour space for light-emitting elements or displays such as, for example, a hue, saturation, lightness (HSL) colour space; a hue, saturation, value (HSV) colour space; any International Commission on Illumination (CIE) colour space (for example, the CIE 1931 colour spaces; the CIE 1976 L* u* v* (CIELUV) colour space; or the CIE L*a*b* (CIELAB) colour space), or other standardized colour space. Furthermore, the predetermined colour space may be a subset of a standard colour space. For example, the predetermined colour space may be a subset of the RGB colour space. The predetermined colour space may be a portion of a standard colour space selected by a user of the aerosol-generating device. Still further, the predetermined colour space may be based on a colour range of the one or more light-emitting devices.

Advantageously, random generation of colour values may allow aerosol-generating devices and systems to differentiate themselves from other aerosol-generating devices and systems. Random generation may reduce the likelihood that two or more aerosol-generating devices or systems emit the same colour or colours.

The colour distances between the colour of ambient light and each of the plurality of generated colour values may be determined using any suitable technique or techniques for determining colour distance. For example, the colour distance may be a Euclidean distance between two colour values in a colour space. In general, colour spaces represent various colours using three variables or colour space values that can be mapped to three-dimensional graphs representative of such colour spaces. A Euclidean distance between the ambient colour value and a generated colour value ($\Delta E_{a \to g}$) can be determined using Equation 1, where X, Y, and Z each correspond to one of the R, G, or B colour values, the $g$ subscript indicates a colour space value of the generated colour value, and the a subscript indicates a colour space value of the ambient colour value.

$$\Delta E_{a \to g} = \sqrt{(X_g - X_a)^2 + (Y_g - Y_a)^2 + (Z_g - Z_a)^2} \qquad \text{(Equation 1)}$$

Equation 1 can be used to determine the colour distance between colour values in any suitable colour space. For example, the CIELAB colour space values (L*, a*, and b*) can be assigned to X, Y, Z respectively.

Another colour distance that can be used is a hybrid of a Euclidean distance and a taxicab distance between two colour values. The hybrid Euclidean taxicab distance can be used for colour spaces that include luminance or chrominance values. For example, Equation 2 can be used to determine the colour distance between two colour values where the CIELAB colour space values a* and b* are represented by X and Y respectively, the luminance colour space value L* is represented by Z, the $g$ subscript indicates a colour space value of a generated colour value, and the a subscript indicates a colour space value of the ambient colour value.

$$\Delta E_{a \to g} = \sqrt{(X_g - X_a)^2 + (Y_g - Y_a)^2} + \left| Z_g - Z_a \right| \qquad \text{(Equation 2)}$$

Yet another colour distance that can be used is a Hausdorff distance between two colour values. In general, the Hausdorff distance measures how far two subsets of a space are from each other. The Hausdorff distance can be calculated using Equations 3-5 where $A$ represents the set of colour space values of the ambient colour value ($A = \{x_1, x_2, x_3\}$) and $B$ represents the set of colour space values of a generated colour value ($B = \{y_1, y_2, y_3\}$).

$$H(A, B) = \max(h(A, B), h(B, A)) \qquad \text{(Equation 3)}$$

$$h(A, B) = \max_{x \in A} \left( \min_{y \in B} \|x - y\| \right) \qquad \text{(Equation 4)}$$

$$h(B, A) = \max_{y \in B} \left( \min_{x \in A} \|y - x\| \right) \qquad \text{(Equation 5)}$$

The colour distances and the equations described above may be adjusted or modified to indicate a perceptual distance. While some colour spaces may be normalized based on perceptual differences others may not be. A colour space normalized based on perceptual differences may result in the colour distances between colour values of the colour space being proportional to the perceptual difference between the colour values. The perceptual difference may be based on human colour perception and the general ability of humans to differentiate between colours. Accordingly, the colour distances or equations may be modified such that the resulting colour distance is indicative of a perceptual distance between the ambient colour value and the plurality of generated colour values. Still further, the colour distances and the equations described above may be adjusted or modified to indicate a perceptual difference corresponding to various types of colour blindness.

The colour distance of the selected one of the plurality of generated colour values may be a greatest colour distance of the plurality of colour distances. In other words, the controller may be configured to select a colour value of the plurality of generated colour values that is farthest from the ambient colour value. Selection of the colour value with the greatest colour distance from the ambient colour value may provide greater contrast between the aerosol-generating device and the environment surrounding the aerosol-generating device. Accordingly, the aerosol-generating device can select and emit one or more colour values that allow the aerosol-generating device to stand out from the environment surrounding the aerosol-generating device.

Advantageously, determining a colour value with the greatest colour distance from the ambient colour values may increase a perceptual difference between aerosol-generating devices and systems and a surrounding environment. Accordingly, such aerosol-generating devices and systems may be easier to locate and less likely to be forgotten or misplaced.

The one or more light-emitting elements may comprise one or more light-emitting diodes (LEDs). The one or more light-emitting elements may comprise a display comprising a plurality of pixels. The one or more light-emitting elements may comprise one or more LEDs and a display comprising a plurality of pixels. For example, one or more light-emitting elements may include one or more light-emitting diodes that provide a backlight for a display panel that includes a plurality of pixels. The display panel may include a liquid crystal display panel. Alternatively, each of the one or more light-emitting elements may be a single pixel of a display that includes a plurality of pixels. For example, the one or more light-emitting elements may include an organic LED (OLED) display or a micro-LED display. The controller may be further configured to cause the display to display one or more symbols based on the selected one of the plurality of generated colour values. Furthermore, the controller may be configured to display a plurality of symbols based on the selected one of the plurality of generated colour values. Still further, the controller may be configured to display a plurality of symbols each based on a different selected colour value.

The controller may be configured to cause the one or more light-emitting elements to emit light having more than one colour. The controller may be configured to emit a number of colours equal to a number of light-emitting elements of the one or more light-emitting elements, a number of pixels, a number of symbols, or other quantity of displayed elements. For example, when two colours are desired, the controller may be configured to generate a second plurality of generated colour values, determine a colour distance between the ambient colour value and each of the second plurality of generated colour values to provide a second plurality of colour distances, select one of the second plurality of generated colour values based on the second plurality of colour distances, and cause the one or more light-emitting elements to emit light having colours corresponding to the selected one of the plurality of generated colour values and the selected one of the second plurality of generated colour values. In other words, the controller may be configured generate a number of sets of generated colour values equal to a number of desired colours and select a colour value of each set of generated colour values based on colour distances of each generated colour values to the ambient colour value. Accordingly, multiple colours may be emitted by the aerosol-generating device.

The controller may be configured to cause the one or more light-emitting elements emit light corresponding to multiple selected colour values. The controller may be configured to cause each of a plurality of light-emitting elements to emit light having a colour corresponding to a different one of the multiple selected colour values. The controller may be configured to cause the one or more light-emitting elements to emit light corresponding to each of the multiple selected colour values in a sequence. The controller may be configured to repeat the sequence. The controller may be configured to display a plurality of symbols, the colour of each symbol corresponding to one of the multiple selected colour values.

The aerosol-generating device may further comprise a user interface configured to receive user inputs. The controller may be configured to receive one or more user inputs using the user interface. The user interface may include one or more buttons, graphical user interfaces (GUIs), touch screens, microphones, or other input devices. The user interface may be operatively coupled to the controller. The one or more user inputs may indicate a colour frame and the plurality of generated colour values may be generated based on the colour frame. In other words, the user inputs may define the predetermined colour space as a subset or frame of a standard colour space. The one or more user inputs may indicate one or more symbols. The controller may be further configured to provide the selected one of the plurality of generated colour values and the one or more symbols to cause the one or more light-emitting elements to display each of the one or more symbols having a colour corresponding to the selected one of the plurality of generated colour values. The one or more symbols may comprise one or more words.

Advantageously, aerosol-generating devices and systems may emit or display combinations of colours and symbols that are less likely to be duplicated by other devices. Accordingly, aerosol-generating devices and systems may be provided that are customizable and easily differentiated from other aerosol-generating devices and systems.

A portion of the housing may cover the one or more light-emitting elements and the portion of the housing may be transparent. Accordingly, the housing may provide protection for the one or more light-emitting elements while allowing the colour of emitted light to be visible in the environment surrounding the aerosol-generating device.

The one or more optical sensors may include any suitable device or devices for receiving light from the environment surrounding the aerosol-generating device and providing a signal representative of the colour of the ambient light. For example, the one or more optical sensors may include one or more filters, one or more photodiodes, one or more optical intensity sensors, or other optical sensing devices. The signal representative of the colour of ambient light may include one or more voltage signals. Each of the one or more voltage signals may be representative of a colour value mapped to a colour space. For example, the one or more optical sensors may include three bandpass filters such that a first of the three bandpass filters allows red light to pass through it, a second of the three bandpass filters allows green light to pass through it, and a third of the three bandpass filters allows blue light to pass through it. An optical intensity sensor may correspond to each filter such that a voltage corresponding to the intensity of each of the colours red, green, and blue are provided.

The heating element may be arranged and configured to mate with and heat an aerosol-generating article. The heating element may be disposed in a heating chamber. The heating chamber may be configured to receive the aerosol-generating article such that the heating element is received into or mated with the aerosol-generating article. The heating chamber may be at least partially disposed in the mouthpiece element. When the aerosol-generating article is mated with the heating element, the airflow channel may couple to an airflow path through the aerosol-generating article. The airflow path through the aerosol-generating article may be in fluid communication with an aerosol-forming substrate of the aerosol-generating article.

According to an example, there is provided an aerosol-generating system. The aerosol-generating system may comprise an aerosol-generating device, one or more optical sensors, and a computing device. The aerosol-generating device may comprise a housing having a mouthpiece element and an air inlet, an airflow channel that extends within the housing between the mouthpiece element and the air inlet, a heating element fixed within the housing and along the airflow channel, and one or more light-emitting elements disposed on or in the housing to emit light. The one or more optical sensors may detect a colour of ambient light in an environment surrounding the aerosol-generating device and provide a signal indicative of the colour of ambient light. The computing device may comprise one or more processors operatively coupled to the one or more optical sensors and the aerosol-generating device. The computing device may be configured to receive the signal indicative of the colour of ambient light from the one or more optical sensors, determine an ambient colour value corresponding to the colour of ambient light based on the signal indicative of the colour of ambient light, generate a plurality of generated colour values, determine a colour distance between the colour of ambient light and each of the plurality of generated colour values to provide a plurality of colour distances, select one of the plurality of generated colour values based on the plurality of colour distances, and provide the selected one of the plurality of generated colour values to the aerosol-generating device to cause the one or more light-emitting elements to emit light based on the selected one of the plurality of generated colour values.

Advantageously, the aerosol-generating systems including one or more optical sensors and one or more light-emitting elements allows the aerosol-generating generating system to differentiate itself from the environment surrounding the aerosol-generating system or device. Detection of the colour of ambient light in the environment surrounding the aerosol-generating device and emission of light having a colour corresponding to a colour value determined based on a colour distance of the colour value from the colour of ambient light, the aerosol-generating system can provide a greater contrast between itself and the surrounding environment. Additionally, the aerosol-generating system may display messages that have increased clarity due to the greater contrast with the surrounding environment.

The computing device may be configured to randomly generate each of the plurality of generated colour values. To randomly generate colour values, the computing device may be configured to use one or more of a pseudorandom number generator, a random number generator, an entropy source, a hardware random number generator, a digital random number generator, or other software or hardware for generating random numbers. The computing device may be configured to generate each of the plurality of generated colour values within a predetermined colour space. For example, the predetermined colour space may be a red, green, and blue (RGB) colour space. In general, the computing device may be configured to generate colour values within any suitable colour space for light-emitting elements or displays such as, for example, a hue, saturation, lightness (HSL) colour space; a hue, saturation, value (HSV) colour space; any International Commission on Illumination (CIE) colour space (for example, the CIE 1931 colour spaces; the CIE 1976 L* u* v* (CIELUV) colour space; or the CIE L*a*b* (CIELAB) colour space), or other standardized colour space. Furthermore, the predetermined colour space may be a subset of a standard colour space. For example, the predetermined colour space may be a subset of the RGB colour space. The predetermined colour space may be a portion of a standard colour space selected by a user of the aerosol-generating device. Still further, the predetermined colour space may be based on a colour range of the one or more light-emitting devices.

Advantageously, random generation of colour values may allow aerosol-generating devices and systems to differentiate themselves from other aerosol-generating devices and systems. Random generation may reduce the likelihood that two or more aerosol-generating devices or systems emit the same colour or colours.

The colour distances between the colour of ambient light and each of the plurality of generated colour values may be determined using any suitable technique or techniques for determining colour distance. For example, the colour distance may be a Euclidean distance between two colour values in a colour space. In general, colour spaces represent various colours using three variables or colour space values that can be mapped to three-dimensional graphs representative of such colour spaces. A Euclidean distance between the ambient colour value and a generated colour value ($\Delta E_{a \rightarrow g}$) can be determined using Equation 1, where X, Y, and Z each correspond to one of the R, G, or B colour values, the $g$ subscript indicates a colour space value of the generated colour value, and the a subscript indicates a colour space value of the ambient colour value. Equation 1 can be used to determine the colour distance between colour values in any suitable colour space. For example, the CIELAB colour space values (L*, a*, and b*) can be assigned to X, Y, Z respectively.

Another colour distance that can be used is a hybrid of a Euclidean distance and a taxicab distance between two colour values. The hybrid Euclidean taxicab distance can be used for colour spaces that include luminance or chrominance values. For example, Equation 2 can be used to determine the colour distance between two colour values where the CIELAB colour space values $a*$ and $b*$ are represented by X and Y respectively, the luminance colour space value $L*$ is represented by Z, the $g$ subscript indicates a colour space value of a generated colour value, and the a subscript indicates a colour space value of the ambient colour value.

Yet another colour distance that can be used is a Hausdorff distance between two colour values. In general, the Hausdorff distance measures how far two subsets of a space are from each other. The Hausdorff distance can be calculated using Equations 3-5 where A represents the set of colour space values of the ambient colour value ($A = \{x_1, x_2, x_3\}$) and B represents the set of colour space values of a generated colour value ($B = \{y_1, y_2, y_3\}$).

The colour distances and the equations described above may be adjusted or modified to indicate a perceptual distance. While some colour spaces may be normalized based on perceptual differences others may not be. A colour space normalized based on perceptual differences may result in the colour distances between colour values of the colour space being proportional to the perceptual difference between the colour values. The perceptual difference may be based on human colour perception and the general ability of humans to differentiate between colours. Accordingly, the colour distances or equations may be modified such that the resulting colour distance is indicative of a perceptual distance between the ambient colour value and the plurality of generated colour values. Still further, the colour distances and the equations described above may be adjusted or modified to indicate a perceptual difference corresponding to various types of colour blindness.

The colour distance of the selected one of the plurality of generated colour values may be a greatest colour distance of the plurality of colour distances. In other words, the computing device may be configured to select a colour value of the plurality of generated colour values that is farthest from the ambient colour value. Selection of the colour value with the greatest colour distance from the ambient colour value may provide greater contrast between the aerosol-generating device and the environment surrounding the aerosol-generating device. Accordingly, the aerosol-generating device can select and emit one or more colour values that allow the aerosol-generating device to stand out from the environment surrounding the aerosol-generating device.

Advantageously, determining a colour value with the greatest colour distance from the ambient colour values may increase a perceptual difference between aerosol-generating devices and systems and a surrounding environment. Accordingly, such aerosol-generating devices and systems may be easier to locate and less likely to be forgotten or misplaced.

The one or more light-emitting elements may comprise one or more light-emitting diodes (LEDs). The one or more light-emitting elements may comprise a display comprising a plurality of pixels. The one or more light-emitting elements may comprise one or more LEDs and a display comprising a plurality of pixels. For example, one or more light-emitting elements may include one or more light-emitting diodes that provide a backlight for a display panel that includes a plurality of pixels. The display panel may include a liquid crystal display panel. Alternatively, each of the one or more light-emitting elements may be a single pixel of a display that includes a plurality of pixels. For example, the one or more light-emitting elements may include an organic LED (OLED) display or a micro-LED display. The computing device may be further configured to cause the display to display one or more symbols based on the selected one of the plurality of generated colour values. Furthermore, the computing device may be configured to display a plurality of symbols based on the selected one of the plurality of generated colour values. Still further, the computing device may be configured to display a plurality of symbols each based on a different selected colour value.

The computing device may be configured to provide multiple generated colour values to the aerosol-generating device to cause the one or more light-emitting elements to emit light having more than one colour. The computing device may be configured provide a number of colour values equal to a number of light-emitting elements of the one or more light-emitting elements, a number of pixels, a number of symbols, or other quantity of displayed elements. For example, when two colours are desired, the computing device may be configured to generate a second plurality of generated colour values, determine a colour distance between the ambient colour value and each of the second plurality of generated colour values to provide a second plurality of colour distances, select one of the second plurality of generated colour values based on the second plurality of colour distances, and cause the one or more light-emitting elements to emit light based the selected one of the plurality of generated colour values and the selected one of the second plurality of generated colour values. In other words, the computing device may be configured generate a number of sets of generated colour values equal to a number of desired colours and select a colour value of each set of generated colour values based on colour distances of each generated colour value to the ambient colour value. Accordingly, multiple colours may be emitted by the aerosol-generating device.

The computing device may be configured to cause the one or more light-emitting elements to emit light having colours corresponding to multiple selected colour values. The computing device may be configured to cause each of a plurality of light-emitting elements to emit light having a colour corresponding to a different one of the multiple selected colour values. The computing device may be configured to cause the one or more light-emitting elements to emit light having colours corresponding to each of the multiple selected colour values in a sequence. The computing device may be configured to repeat the sequence. The computing device may be configured to display a plurality of symbols, the colour of each symbol corresponding to one of the multiple selected colour values.

The computing device may further comprise a user interface configured to receive user inputs. The computing device may be configured to receive one or more user inputs using the user interface. The user interface may include one or more buttons, graphical user interfaces (GUIs), touch screens, microphones, or other input devices. The user interface may be operatively coupled to the one or more processors. The one or more user inputs may indicate a colour frame and the plurality of generated colour values may be generated based on the colour frame. In other words, the user inputs may define the predetermined colour space as a subset or frame of a standard colour space. The one or more user inputs may indicate one or more symbols. The computing device may be further configured to provide the selected one of the plurality of generated colour values and the one or more symbols to cause the one or more light-emitting elements to display each of the one or more symbols having a colour corresponding to the selected one of the plurality of generated colour values. The one or more symbols may comprise one or more words.

Advantageously, aerosol-generating devices and systems may emit or display combinations of colours and symbols that are less likely to be duplicated by other devices. Accordingly, aerosol-generating devices and systems may be provided that are customizable and easily differentiated from other aerosol-generating devices and systems.

A portion of the housing may cover the one or more light-emitting elements and the portion of the housing may be transparent. Accordingly, the housing may provide protection for the one or more light-emitting elements while allowing the colour of emitted light to be visible in the environment surrounding the aerosol-generating device.

The aerosol-generating device may comprise the computing device. Alternatively, the computing device may be a separate device from the aerosol-generating device. The computing device may comprise a charger for the aerosol-generating device. The computing device may comprise a computing device separate from the aerosol-generating device and the charger for the aerosol-generating device.

The one or more optical sensors may include any suitable device or devices for receiving light from the environment surrounding the aerosol-generating device and providing a signal representative of the colour of the ambient light. For example, the one or more optical sensors may include one or more filters, one or more photodiodes, one or more optical intensity sensors, or other optical sensing devices. The signal representative of the colour of ambient light may include one or more voltage signals. Each of the one or more voltage signals may be representative of a colour value mapped to a colour space. For example, the one or more optical sensors may include three bandpass filters such that a first of the three bandpass filters allows red light to pass through it, a second of the three bandpass filters allows green light to pass through it, and a third of the three bandpass filters allows blue light to pass through it. An optical intensity sensor may correspond to each filter such that a voltage corresponding to the intensity of each of the colours red, green, and blue are provided.

The one or more optical sensors may be disposed on or in any device within the environment surrounding the aerosol-generating device. The one or more optical sensors disposed on or in the housing of the aerosol-generating device. The optical sensors may be disposed on or in the computing device. The computing device may be the charger for the aerosol-generating device.

The heating element may be arranged and configured to mate with and heat an aerosol-generating article. The heating element may be disposed in a heating chamber. The heating chamber may be configured to receive the aerosol-generating article such that the heating element is received into or mated with the aerosol-generating article. The heating chamber may be at least partially disposed in the mouthpiece element. When the aerosol-generating article is mated with the heating element, the airflow channel may couple to an airflow path through the aerosol-generating article. The airflow path through the aerosol-generating article may be in fluid communication with an aerosol-forming substrate of the aerosol-generating article.

According to an aspect, there is provided a method comprising receiving a signal indicative of a colour of ambient light of an environment surrounding an aerosol-generating device from one or more optical sensors, determining an ambient colour value corresponding to the colour of ambient light based on the signal indicative of the colour of ambient light, generating a plurality of generated colour values, determining a colour distance between the colour of ambient light and each of the plurality of generated colour values to provide a plurality of colour distances, selecting one of the plurality of generated colour values based on the plurality of colour distances, and providing the selected one of the plurality of generated colour values to the aerosol-generating device to cause one or more light-emitting elements of the aerosol-generating device to emit light having a colour corresponding to the selected one of the plurality of generated colour values.

Advantageously, the method allows aerosol-generating devices to differentiate themselves from environments surrounding the aerosol-generating device. By detecting the colour of ambient light in the environment surrounding the aerosol-generating device and providing colour values that cause light to be emitted with a colour based on a colour distance from the colour of ambient light, aerosol-generating devices can provide a greater contrast between themselves and surrounding environments. Additionally, the method may allow aerosol-generating devices to display messages that have increased clarity due to the greater contrast with the surrounding environment.

Each of the plurality of generated colour values may be randomly generated. One or more of a pseudorandom number generator, a random number generator, an entropy source, a hardware random number generator, a digital random number generator, or other software or hardware for generating random numbers may be used to randomly generate numbers. Each of the plurality of generated colour values may be generated within a predetermined colour space. For example, the predetermined colour space may be a red, green, and blue (RGB) colour space. In general, the controller may be configured to generate colour values within any suitable colour space for light-emitting elements or displays such as, for example, a hue, saturation, lightness (HSL) colour space; a hue, saturation, value (HSV) colour space; any International Commission on Illumination (CIE) colour space (for example, the CIE 1931 colour spaces; the CIE 1976 L\* u\* v\* (CIELUV) colour space; or the CIE L\*a\*b\* (CIELAB) colour space), or other standardized colour space. Furthermore, the predetermined colour space may be a subset of a standard colour space. For example, the predetermined colour space may be a subset of the RGB colour space. The predetermined colour space may be a portion of a standard colour space selected by a user of the aerosol-generating device. Still further, the predetermined colour space may be based on a colour range of the one or more light-emitting devices.

Advantageously, random generation of colour values may allow aerosol-generating devices and systems to differentiate themselves from other aerosol-generating devices and systems. Random generation may reduce the likelihood that two or more aerosol-generating devices or systems emit the same colour or colours.

The colour distances between the colour of ambient light and each of the plurality of generated colour values may be determined using any suitable technique or techniques for determining colour distance. For example, the colour distance may be a Euclidean distance between two colour values in a colour space. In general, colour spaces represent various colours using three variables or colour space values that can be mapped to three-dimensional graphs representative of such colour spaces. A Euclidean distance between the ambient colour value and a generated colour value ($\Delta E_{a \rightarrow g}$) can be determined using Equation 1, where X, Y, and Z each correspond to one of the R, G, or B colour values, the $g$ subscript indicates a colour space value of the generated colour value, and the $a$ subscript indicates a colour space value of the ambient colour value. Equation 1 can be used to determine the colour distance between colour values in any suitable colour space. For example, the CIELAB colour space values (L\*, a\*, and b\*) can be assigned to X, Y, Z respectively.

Another colour distance that can be used is a hybrid of a Euclidean distance and a taxicab distance between two colour values. The hybrid Euclidean taxicab distance can be used for colour spaces that include luminance or chrominance values. For example, Equation 2 can be used to determine the colour distance between two colour values where the CIELAB colour space values $a^*$ and $b^*$ are represented by X and Y respectively, the luminance colour space value $L^*$ is represented by Z, the $g$ subscript indicates a colour space value of a generated colour value, and the a subscript indicates a colour space value of the ambient colour value.

Yet another colour distance that can be used is a Hausdorff distance between two colour values. In general, the Hausdorff distance measures how far two subsets of a space are from each other. The Hausdorff distance can be calculated using Equations 3-5 where $A$ represents the set of colour space values of the ambient colour value ($A = \{x_1, x_2, x_3\}$) and $B$ represents the set of colour space values of a generated colour value ($B = \{y_1, y_2, y_3\}$).

The colour distances and the equations described above may be adjusted or modified to indicate a perceptual distance. While some colour spaces may be normalized based on perceptual differences others may not be. A colour space normalized based on perceptual differences may result in the colour distances between colour values of the colour space being proportional to the perceptual difference between the colour values. The perceptual difference may be based on human colour perception and the general ability of humans to differentiate between colours. Accordingly, the colour distances or equations may be modified such that the resulting colour distance is indicative of a perceptual distance between the ambient colour value and the plurality of generated colour values. Still further, the colour distances and the equations described above may be adjusted or modified to indicate a perceptual difference corresponding to various types of colour blindness.

The colour distance of the selected one of the plurality of generated colour values may be a greatest colour distance of the plurality of colour distances. In other words, a colour value of the plurality of generated colour values that is farthest from the ambient colour value may be selected. Selection of the colour value with the greatest colour distance from the ambient colour value may provide greater contrast between the aerosol-generating device and the environment surrounding the aerosol-generating device. Accordingly, one or more colour values that allow aerosol-generating devices to stand out from an environment surrounding the aerosol-generating devices may be selected.

Advantageously, determining a colour value with the greatest colour distance from the ambient colour values may increase a perceptual difference between aerosol-generating devices and systems and a surrounding environment. Accordingly, such aerosol-generating devices and systems may be easier to locate and less likely to be forgotten or misplaced.

The method may include providing multiple generated colour values to cause the one or more light-emitting elements to emit light having more than one colour. The method may include selecting and providing a number of colour values equal to a number of light-emitting elements of the one or more light-emitting elements, a number of pixels, a number of symbols, or other quantity of displayed elements. For example, when two colours are desired, the method may include generating a second plurality of generated colour values, determining a colour distance between the ambient colour value and each of the second plurality of generated colour values to provide a second plurality of colour distances, selecting one of the second plurality of generated colour values based on the second plurality of colour distances, and causing the one or more light-emitting elements to emit light based the selected one of the plurality of generated colour values and the selected one of the second plurality of generated colour values. In other words, the method may include generating a number of sets of generated colour values equal to a number of desired colours and selecting a colour value of each set of generated colour values based on colour distances of each generated colour value to the ambient colour value. Accordingly, the method may cause multiple colours to be emitted by the one or more light-emitting devices.

The method may include selecting multiple colour values and causing the one or more light-emitting elements to emit light having colours corresponding to multiple colour values. The method may include causing each of a plurality of light-emitting elements to emit light having a colour corresponding to a different one of the multiple selected colour values. The method may include causing the one or more light-emitting elements to emit light having colours corresponding to each of the multiple selected colour values in a sequence. The method may include repeating the sequence. The method may include displaying a plurality of symbols, the colour of each symbol corresponding to one of the multiple selected colour values. The method may include causing each of a plurality of light-emitting elements to emit light having a colour corresponding to a different one of the multiple selected colour values.

The method may further comprise receiving one or more user inputs using a user interface. The user interface may include one or more buttons, graphical user interfaces (GUIs), touch screens, microphones, or other input devices. The one or more user inputs may indicate a colour frame and the plurality of generated colour values may be generated based on the colour frame. In other words, the user inputs may define the predetermined colour space as a subset or frame of a standard colour space. The one or more user inputs may indicate one or more symbols. The method may include providing the selected one of the plurality of generated colour values and the one or more symbols to cause the one or more light-emitting elements to display each of the one or more symbols having a colour corresponding to the selected one of the plurality of generated colour values. The one or more symbols may comprise one or more words.

Advantageously, aerosol-generating devices and systems may emit or display combinations of colours and symbols that are less likely to be duplicated by other devices. Accordingly, aerosol-generating devices and systems may be provided that are customizable and easily differentiated from other aerosol-generating devices and systems.

According to an aspect, there is provided a computer program product comprising a non-transitory computer readable medium having program code portions stored thereon. The program code portions are configured, when said program product is run on a computer or network device, to receive a signal indicative of a colour of ambient light of an environment surrounding an aerosol-generating device from one or more optical sensors, determine an ambient colour value corresponding to the colour of ambient light based on the signal indicative of the colour of ambient light, generate a plurality of generated colour values, determine a colour distance between the colour of ambient light and each of the plurality of generated colour values to provide a plurality of colour distances, select one of the plurality of generated colour values based on the plurality of colour distances, and provide the selected one of the plurality of generated colour values to the aerosol-generating device to cause one or more light-emitting elements of the aerosol-generating device to emit light having a colour corresponding to the selected one of the plurality of generated colour values.

Advantageously, the computer program product allows aerosol-generating devices to differentiate themselves from environments surrounding the aerosol-generating device. By detecting the colour of ambient light in the environment surrounding the aerosol-generating device and providing colour values that cause light to be emitted with a colour based on a colour distance from the colour of ambient light, aerosol-generating devices can provide a greater contrast between themselves and surrounding environments. Additionally, the computer program product may allow aerosol-generating devices to display messages that have increased clarity due to the greater contrast with the surrounding environment.

Each of the plurality of generated colour values may be randomly generated. One or more of a pseudorandom number generator, a random number generator, an entropy source, a hardware random number generator, a digital random number generator, or other software or hardware for generating random numbers may be used to randomly generate numbers. Each of the plurality of generated colour values may be generated within a predetermined colour space. For example, the predetermined colour space may be a red, green, and blue (RGB) colour space. In general, the controller may be configured to generate colour values within any suitable colour space for light-emitting elements or displays such as, for example, a hue, saturation, lightness (HSL) colour space; a hue, saturation, value (HSV) colour space; any International Commission on Illumination (CIE) colour space (for example, the CIE 1931 colour spaces; the CIE 1976 L* u* v* (CIELUV) colour space; or the CIE L*a*b* (CIELAB) colour space), or other standardized colour space. Furthermore, the predetermined colour space may be a subset of a standard colour space. For example, the predetermined colour space may be a subset of the RGB colour space. The predetermined colour space may be a portion of a standard colour space selected by a user of the aerosol-generating device. Still further, the predetermined colour space may be based on a colour range of the one or more light-emitting devices.

Advantageously, random generation of colour values may allow aerosol-generating devices and systems to differentiate themselves from other aerosol-generating devices and systems. Random generation may reduce the likelihood that two or more aerosol-generating devices or systems emit the same colour or colours.

The colour distances between the colour of ambient light and each of the plurality of generated colour values may be determined using any suitable technique or techniques for determining colour distance. For example, the colour distance may be a Euclidean distance between two colour values in a colour space. In general, colour spaces represent various colours using three variables or colour space values that can be mapped to three-dimensional graphs representative of such colour spaces. A Euclidean distance between the ambient colour value and a generated colour value ($\Delta E_{a \to g}$) can be determined using Equation 1, where X, Y, and Z each correspond to one of the R, G, or B colour values, the $g$ subscript indicates a colour space value of the generated colour value, and the a subscript indicates a colour space value of the ambient colour value. Equation 1 can be used to determine the colour distance between colour values in any suitable colour space. For example, the CIELAB colour space values (L*, a*, and b*) can be assigned to X, Y, Z respectively.

Another colour distance that can be used is a hybrid of a Euclidean distance and a taxicab distance between two colour values. The hybrid Euclidean taxicab distance can be used for colour spaces that include luminance or chrominance values. For example, Equation 2 can be used to determine the colour distance between two colour values where the CIELAB colour space values $a*$ and $b*$ are represented by X and Y respectively, the luminance colour space value L* is represented by Z, the $g$ subscript indicates a colour space value of a generated colour value, and the a subscript indicates a colour space value of the ambient colour value.

Yet another colour distance that can be used is a Hausdorff distance between two colour values. In general, the Hausdorff distance measures how far two subsets of a space are from each other. The Hausdorff distance can be calculated using Equations 3-5 where $A$ represents the set of colour space values of the ambient colour value ($A = \{x_1, x_2, x_3\}$) and $B$ represents the set of colour space values of a generated colour value ($B = \{y_1, y_2, y_3\}$).

The colour distances and the equations described above may be adjusted or modified to indicate a perceptual distance. While some colour spaces may be normalized based on perceptual differences others may not be. A colour space normalized based on perceptual differences may result in the colour distances between colour values of the colour space being proportional to the perceptual difference between the colour values. The perceptual difference may be based on human colour perception and the general ability of humans to differentiate between colours. Accordingly, the colour distances or equations may be modified such that the resulting colour distance is indicative of a perceptual distance between the ambient colour value and the plurality of generated colour values. Still further, the colour distances and the equations described above may be adjusted or modified to indicate a perceptual difference corresponding to various types of colour blindness.

The colour distance of the selected one of the plurality of generated colour values may be a greatest colour distance of the plurality of colour distances. In other words, a colour value of the plurality of generated colour values that is farthest from the ambient colour value may be selected. Selection of the colour value with the greatest colour distance from the ambient colour value may provide greater contrast between the aerosol-generating device and the environment surrounding the aerosol-generating device. Accordingly, one or more colour values that allow aerosol-generating devices to stand out from an environment surrounding the aerosol-generating devices may be selected.

Advantageously, determining a colour value with the greatest colour distance from the ambient colour values may increase a perceptual difference between aerosol-generating devices and systems and a surrounding environment. Accordingly, such aerosol-generating devices and systems may be easier to locate and less likely to be forgotten or misplaced.

The program portions may be configured to provide multiple generated colour values to cause the one or more light-emitting elements to emit light having more than one colour. The program portions may be configured to select and provide a number of colour values equal to a number of light-emitting elements of the one or more light-emitting elements, a number of pixels, a number of symbols, or other quantity of displayed elements. For example, when two colours are desired, the program portions may be configured to generate a second plurality of generated colour values, determine a colour distance between the ambient colour value and each of the second plurality of generated colour values to provide a second plurality of colour distances, select one of the second plurality of generated colour values based on the second plurality of colour distances, and cause the one or more light-emitting elements to emit light based the selected one of the plurality of generated colour values and the selected one of the second plurality of generated colour values. In other words, the program portions may be configured to generate a number of sets of generated colour values equal to a number of desired colours and selecting a colour value of each set of generated colour values based on colour distances of each generated colour value to the ambient colour value. Accordingly, computer program product may cause multiple colours to be emitted by the one or more light-emitting devices.

The program portions may be configured to select multiple colour values and cause the one or more light-emitting elements to emit light having colours corresponding to multiple colour values. The program portions may be configured to cause each of a plurality of light-emitting elements to emit light having a colour corresponding to a different one of the multiple selected colour values. The program portions may be configured to cause the one or more light-emitting elements to emit light having colours corresponding to each of the multiple selected colour values in a sequence. The program portions may be configured to repeat the sequence. The program portions may be configured to display a plurality of symbols, the colour of each symbol corresponding to one of the multiple selected colour values. The program portions may be configured to cause each of a plurality of light-emitting elements to emit light having a colour corresponding to a different one of the multiple selected colour values.

The program portions may be configured to receive one or more user inputs using a user interface. The user interface may include one or more buttons, graphical user interfaces (GUIs), touch screens, microphones, or other input devices. The one or more user inputs may indicate a colour frame and the plurality of generated colour values may be generated based on the colour frame. In other words, the user inputs may define the predetermined colour space as a subset or frame of a standard colour space. The one or more user inputs may indicate one or more symbols. The program portions may be configured to provide the selected one of the plurality of generated colour values and the one or more symbols to cause the one or more light-emitting elements to display each of the one or more symbols having a colour corresponding to the selected one of the plurality of generated colour values. The one or more symbols may comprise one or more words.

Advantageously, aerosol-generating devices and systems may emit or display combinations of colours and symbols that are less likely to be duplicated by other devices. Accordingly, aerosol-generating devices and systems may be provided that are customizable and easily differentiated from other aerosol-generating devices and systems.

As used herein, the term "colour value" refers to a set of "colour space values" corresponding to a "colour space." For example, a colour value in the RGB colour space includes a red colour space value (R), a green colour space value (G), and a blue colour space value (B).

As used herein, the term "display" refers to an electronic device including a plurality of pixels for the visual presentation of one or more symbols or images. The plurality of pixels of a display, as used herein, includes at least enough pixels to display a single one of any ASCII printable characters. In one or more embodiments, a display includes at least 25 pixels.

As used herein, the term "symbol" refers to any one or more of an alphanumeric character of any suitable language; an ASCII printable character; an icon; or other visual representation of an object, function, or process.

As used herein, the term "aerosol-forming substrate" refers to a substrate capable of releasing, upon heating, volatile compounds, which can form an aerosol. The aerosols generated from aerosol-forming substrates of smoking articles according to the present disclosure may be visible or invisible and may include vapours (for example, fine particles of substances, which are in a gaseous state, that are ordinarily liquid or solid at room temperature) as well as gases and liquid droplets of condensed vapours. One example of a heated-type aerosol-generating article are the IQOS heat sticks, also known as MARLBORO HEATSTICKS, from Phillip Morris International for use in an IQOS, heat not burn, aerosol-generating device, also from Phillip Morris International.

The term "aerosol-generating device" refers to a device configured to use, or utilize, an aerosol-generating article that releases volatile compounds to form an aerosol that may be inhaled by a user.

The term "controller" and "processor" refers to any device or apparatus capable of providing suitable computing capabilities and control capabilities such as, for example, microprocessors, digital signal processors (DSP), application specific integrated circuits (ASIC), field-programmable gate arrays (FPGA), equivalent discrete or integrated logic circuitry, or any combination thereof and of providing suitable data storage capabilities that includes any medium (for example, volatile or non-volatile memory, a CD-ROM, magnetic recordable medium such as a disk or tape, etc.) containing digital bits (for example, encoded in binary, trinary, etc.) that may be readable and/or writeable.

The term "communication interface" refers to any device or apparatus capable of providing suitable data communication capabilities between devices such as an aerosol-generating device, a charger, or a computing device such as, for example, various telemetry circuits and antennas and may use one or more wired or wireless (for example, radio frequency) data transmission protocols such as, for example, BLUETOOTH, WI-FI, any protocol in the ultra-high frequency (UHF) band, any protocol in the super high frequency (SHF) band, low frequencies, or combinations thereof.

The invention is defined in the claims.

Examples will now be further described with reference to the figures in which:

Fig. 1 shows a system including an aerosol-generating device;
Fig. 2 shows a side view of the aerosol-generating device of Fig. 1;
Fig. 3 shows schematic block diagram of the system of Fig. 1; and
Fig. 4 shows a schematic block diagram of another system.

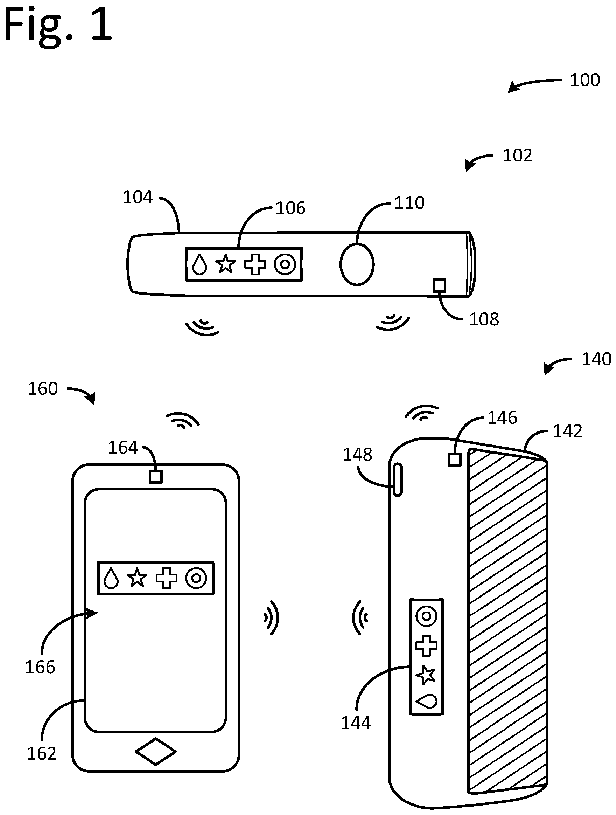

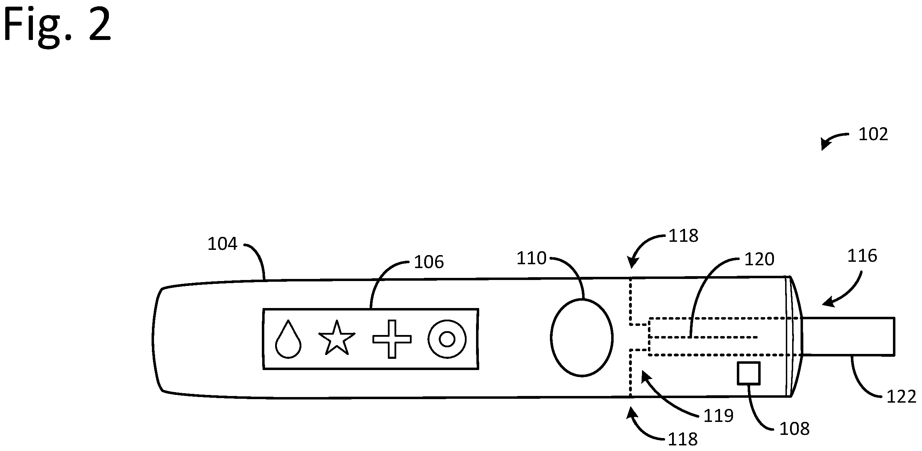

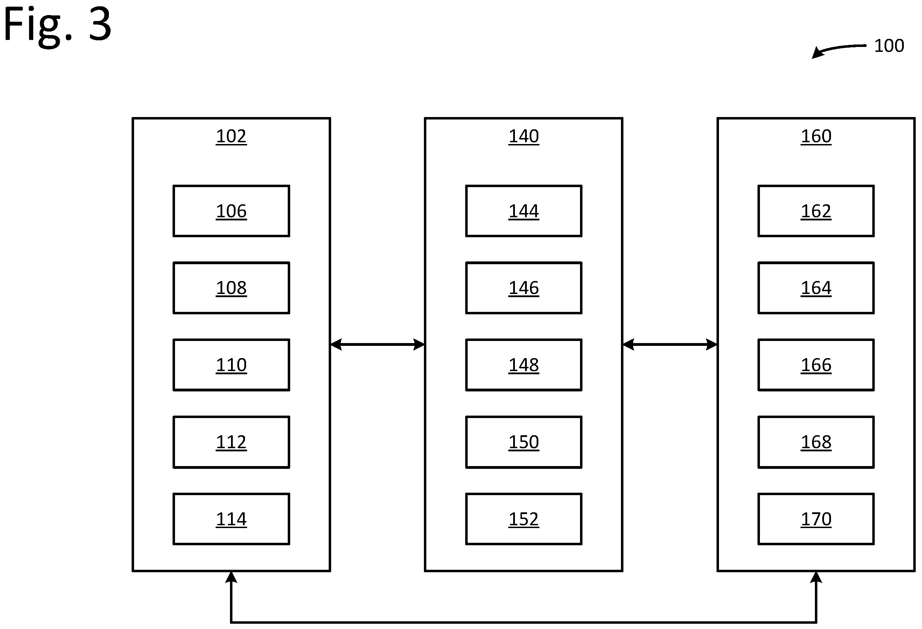

Figs. 1-3 show a system 100 and an aerosol-generating device 102. Fig. 1 shows the system 100 including the aerosol-generating device. Fig. 2 shows the aerosol-generating device 102 in greater detail. Fig. 3 shows a schematic block diagram of the system 100. The system 100 includes the aerosol-generating device 102 and a charger 140.

The aerosol-generating device 102 includes a housing 104, one or more light-emitting elements 106, one or more optical sensors 108, a user interface 110, a controller 112, and a communication interface 114. The housing 104 includes a mouthpiece element 116 and air inlets 118. An airflow channel 119 extends within the housing between the mouthpiece element 116 and the air inlets 118. A heating element 120 is fixed within the housing. The heating element 120 is arranged and configured to mate with and heat an aerosol-generating article 122. The aerosol-generating device 102 also includes a power source (not shown), such as a battery, to provide power to and heat the heating element 120.

The charger 140 includes a charger housing 142, one or more light-emitting elements 144, an optical sensor 146, a user interface 148, a controller 150, and a communication interface 152. The charger housing 142 also includes a charging apparatus (not shown) to charge the aerosol-generating device 102.

The system 100 may also include the computing device 160. The computing device 160 may be, for example, any fixed or mobile computer system (for example, a personal computer, a tablet computer, a mobile device, a cellular phone, a wearable device). The exact configuration of the computing device 160 is not limiting and essentially any device capable of providing suitable computing capabilities and control capabilities (for example, generating colour values, determining a colour distance between generated colour values and an ambient colour value, controlling light-emitting elements to emit coloured light, or other methods and processes described herein) may be used. Further, various peripheral devices, such as a computer display, mouse, keyboard, memory, printer, scanner, or other peripheral device are contemplated to be used in combination with the computing device 160. The computing device 160 includes a display 162, an optical sensor 164, a user interface 166, one or more processors 168, and a communication interface 170.

The one or more light-emitting elements 106 may be disposed on or in the housing 104 to emit light. Similarly, the one or more light-emitting elements 144 may be disposed in or on the charger housing 142. The one or more light-emitting elements 106, 144 may be configured to emit any colour of light within the visible spectrum of light. The one or more light-emitting elements 106, 144 may include one or more light-emitting diodes (LEDs) or other light source. In addition, the one or more light-emitting elements 106, 144 may include a display that includes a plurality of pixels. The plurality of pixels may be defined by a plurality of light-emitting diodes, a liquid crystal display panel, or other type of display. The plurality of pixels may be arranged such that the one or more light-emitting elements 106, 144 may display any alpha-numeric character, symbol, or ASCII characters. The one or more light-emitting elements 106, 144 may also be capable of displaying images and animations in any suitable colour or colours.

The optical sensor 108 is disposed in the housing 104 to detect a colour of ambient light in an environment surrounding the aerosol-generating device 102. The environment surrounding the aerosol-generating device 102 may refer to a room in which the aerosol-generating device 102 is located. The environment surrounding the aerosol-generating device 102 may refer to a space, one or more surfaces, or one or more objects within about a five metre radius of the aerosol-generating device 102. Ambient light may include light emitted from a nearby light source or reflections off of surfaces or objects within the surrounding environment. The optical sensor 108 may include any suitable device or devices for receiving light from the environment surrounding the aerosol-generating device 102 and providing a signal representative of the colour of the ambient light.

Similarly, the optical sensor 146 is disposed in the charger housing 142 to detect a colour of ambient light in an environment surrounding the aerosol-generating system 100 or aerosol-generating device 102. The computing device 160 also includes an optical sensor 164 capable of sensing ambient light in an environment surrounding the aerosol-generating system 100 or aerosol-generating device 102. may include any suitable device or devices for receiving light the ambient light and providing a signal representative of the colour of the ambient light.

The optical sensors 108, 146, 164 may include one or more filters, one or more photodiodes, one or more optical intensity sensors, or other optical sensing devices. The signal representative of the colour of ambient light may include one or more voltage signals. Each of the one or more voltage signals may be representative of a colour value mapped to a colour space. For example, each of the optical sensors 108, 146, 164 may include three bandpass filters such that a first of the three bandpass filters allows red light to pass through it, a second of the three bandpass filters allows green light to pass through it, and a third of the three bandpass filters allows blue light to pass through it. An optical intensity sensor may correspond to each filter such that a voltage corresponding to the intensity of each of the colours red, green, and blue are provided.

The user interfaces 110, 148, 166 may be configured to receive user inputs. The user interfaces 110, 148, 166 may include one or more buttons, graphical user interfaces, touch screens, microphones, or other input devices.

The controller 112 of the aerosol-generating device 102 may include one or more processors and may be operatively coupled to the one or more display elements 106 and the optical sensor 108 to provide suitable computing capabilities and control capabilities (for example, receiving sensor signals, generating colour values, and other processes described herein). The controller 112 may also be operatively coupled to the user interface 110 to receive user inputs.

Similarly, the controller 150 of the charger 140 may include one or more processors and may be operatively coupled to the one or more display elements 144 and the optical sensor 146 to provide suitable computing capabilities and control capabilities (for example, receiving sensor signals, generating colour values, and other processes described herein). The controller 150 may also be operatively coupled to the user interface 148 to receive user inputs.

Each of the aerosol-generating device 102, the charger 140, and the computing device 160 include communication interfaces 114, 152, 170 to provide communication capabilities to each other or other computing apparatus or devices. For example, user inputs may be received at the computing device 160 and transmitted to the aerosol-generating device. In other examples, the computing device 160 may receive signals indicative of the colour of ambient light from the aerosol-generating device 102 or charger 140 and carry out the methods described herein (for example, determine an ambient colour value corresponding to the colour of ambient light based on the signal indicative of the colour of ambient light, generate a plurality of generated colour values, determine a colour distance between the colour of ambient light and each of the plurality of generated colour values to provide a plurality of colour distances, select one of the plurality of generated colour values based on the plurality of colour distances, or other steps or processes described herein). The computing device 160 may provide the selected one of the plurality of generated colour values to the aerosol-generating device 102 to cause the one or more light-emitting elements 106 to emit light having a colour corresponding to the selected one of the plurality of generated colour values. Alternatively, the controller 150 of the charger 140 may receive signals indicative of the colour of ambient light from the aerosol-generating device 102 and carry out the methods described herein.

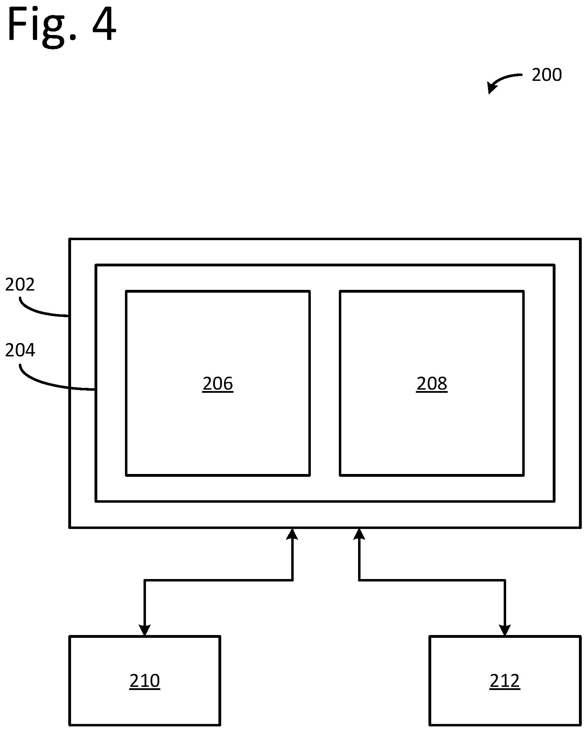

A schematic block diagram of another aerosol-generating system 200 according to embodiments described herein is shown in FIG. 4. The aerosol-generating system 200 may include a computing device or processor 202, one or more light-emitting elements 210, and an optical sensor 212. Generally, the one or more light-emitting elements 210 may be operatively coupled to the computing device 202 and may include any suitable circuits or devices configured to emit light similar to the light-emitting elements 106, 144 of FIGS. 1-3. For example, the one or more light-emitting elements 210 may include one or more LEDs or displays. The one or more light-emitting elements 210 may be disposed or included in an aerosol-generating device or a charger such as aerosol-generating device 102 or charger 140.

The aerosol-generating system 200 further includes an optical sensor 212. The optical sensor may be operatively coupled to the computing device 202 and may include any suitable circuits or devices configured to sense a colour of ambient light similar to the optical sensors 108, 146, 164. For example, the optical sensor 212 may include one or more filters, one or more photodiodes, one or more optical intensity sensors, or other optical sensing devices. The optical sensor 212 may be disposed or included in an aerosol-generating device or a charger such as aerosol-generating device 102 or charger 140.

Further, the computing device 202 includes data storage 204. Data storage 204 allows for access to processing programs, routines, or computer program product 206 and one or more other types of data 208 that may be employed to carry out the techniques, processes, and algorithms for selecting and providing a colour value based on a colour distance from an ambient colour value. For example, processing programs or routines 206 may include programs or routines for providing/determining colour values, determining colour distances, generating colour values, filtering noise, transmitting data, receiving data, determining thresholds, computational mathematics, matrix mathematics, Fourier transforms, compression algorithms, calibration algorithms, colour space transformations, inversion algorithms, signal processing algorithms, normalizing algorithms, deconvolution algorithms, averaging algorithms, standardization algorithms, comparison algorithms, vector mathematics, or any other processing required to implement one or more embodiments as described herein.

Data 208 may include, for example, signal data, colour space data, colour value data, colour distance data, colour frames, calibration data, resistance calculations, device settings, error bit states, historical data, thresholds, arrays, meshes, grids, variables, counters, statistical estimations of accuracy of results, results from one or more processing programs or routines employed according to the disclosure herein, or any other data that may be necessary for carrying out the one or more processes or techniques described herein.

In one or more embodiments, the aerosol-generating system 200 may be controlled using one or more computer programs executed on programmable computers, such as computers that include, for example, processing capabilities (for example, microcontrollers, programmable logic devices, etc.), data storage (for example, volatile or non-volatile memory and/or storage elements), input devices, and output devices. Program code and/or logic described herein may be applied to input data to perform functionality described herein and generate desired output information. The output information may be applied as input to one or more other devices and/or processes as described herein or as would be applied in a known fashion.

The programs used to implement the processes described herein may be provided using any programmable language, for example, a high-level procedural and/or object orientated programming language that is suitable for communicating with a computer system. Any such programs may, for example, be stored on any suitable device, for example, a storage media, readable by a general or special purpose program, computer, or a processor apparatus for configuring and operating the computer when the suitable device is read for performing the procedures described herein. In other words, at least in one embodiment, the aerosol-generating system 200 may be controlled using a computer readable storage medium, configured with a computer program, where the storage medium so configured causes the computer to operate in a specific and predefined manner to perform functions described herein.

The computing device 202 may be, for example, any fixed or mobile computer system such as a personal computer or minicomputer. The exact configuration of the computing apparatus is not limiting and essentially any device capable of providing suitable computing capabilities and control capabilities may be used. Additionally, the computing device 202 may be incorporated in an aerosol-generating device 102 or the charger 140. Further, various peripheral devices, such as a computer display, mouse, keyboard, memory, printer, scanner, etc. are contemplated to be used in combination with the computing device 202. Further, in one or more embodiments, the data 208 may be analyzed by a user or used by another machine that provides output based thereon. As described herein, a digital file may be any volatile or non-volatile medium containing digital bits that may be readable and/or writeable by computing device 202 described herein. Also, as described herein, a file in user-readable format may be any representation of data (for example, ASCII text, binary numbers, hexadecimal numbers, decimal numbers, audio, graphical) presentable on any medium (for example, paper, a display, sound waves) readable and/or understandable by a user.

In view of the above, it will be readily apparent that the functionality as described in one or more embodiments according to the present disclosure may be implemented in any manner as would be known to one skilled in the art. As such, the computer language, the computer system, or any other software/hardware that is to be used to implement the processes described herein shall not be limiting on the scope of the systems, processes, or programs (for example, the functionality provided by such systems, processes, or programs) described herein.

The techniques described in this disclosure, including those attributed to the systems, or various constituent components, may be implemented, at least in part, in hardware, software, firmware, or any combination thereof. For example, various aspects of the techniques may be implemented by the computing device 202, which may use one or more processors such as, for example, one or more microprocessors, DSPs, ASICs, FPGAs, CPLDs, microcontrollers, or any other equivalent integrated or discrete logic circuitry, as well as any combinations of such components, image processing devices, or other devices. The term "processing apparatus," "processor," or "processing circuitry" may generally refer to any of the foregoing logic circuitry, alone or in combination with other logic circuitry, or any other equivalent circuitry. Additionally, the use of the word "processor" may not be limited to the use of a single processor but is intended to connote that at least one processor may be used to perform the techniques and processes described herein.

Such hardware, software, and/or firmware may be implemented within the same device or within separate devices to support the various operations and functions described in this disclosure. In addition, any of the described components may be implemented together or separately as discrete but interoperable logic devices. Depiction of different features, for example, using block diagrams, etc., is intended to highlight different functional aspects and does not necessarily imply that such features must be realized by separate hardware or software components. Rather, functionality may be performed by separate hardware or software components or integrated within common or separate hardware or software components.

When implemented in software, the functionality ascribed to the systems, devices and techniques described in this disclosure may be embodied as instructions on a computer-readable medium such as RAM, ROM, NVRAM, EEPROM, FLASH memory, magnetic data storage media, optical data storage media, or the like. The instructions may be executed by the computing device 202 to support one or more aspects of the functionality described in this disclosure.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A $\pm$ 10 percent of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. An aerosol-generating device (102) comprising:

   a housing (104) having a mouthpiece element (116) and an air inlet (118);
   an airflow channel (119) extends within the housing between the mouthpiece element (116) and the air inlet (118);
   a heating element (120) fixed within the housing (104);
   one or more optical sensors (108) disposed in the housing (104) to detect a colour of ambient light in an environment surrounding the aerosol-generating device (102) and provide a signal indicative of the colour of ambient light;
   one or more light-emitting elements (106) disposed on or in the housing (104) to emit light; and
   a controller (112) comprising one or more processors operatively coupled to the one or more optical sensors (108) and the one or more light-emitting elements (106), the controller (112) configured to:

      receive the signal indicative of the colour of ambient light from the one or more optical sensors (108);

determine an ambient colour value corresponding to the colour of ambient light based on the signal indicative of the colour of ambient light;
generate a plurality of generated colour values;
determine a colour distance between the colour of ambient light and each of the plurality of generated colour values to provide a plurality of colour distances;
select one of the plurality of generated colour values based on the plurality of colour distances; and
cause the one or more light-emitting elements (106) to emit light having a colour corresponding to the selected one of the plurality of generated colour values.

2. The aerosol-generating device as in claim 1, wherein the controller (112) is configured to randomly generate each of the plurality of generated colour values.

3. The aerosol-generating device as in any one of the preceding claims, wherein the controller (112) is further configured to:

generate a second plurality of generated colour values;
determine a colour distance between the ambient colour value and each of the second plurality of generated colour values to provide a second plurality of colour distances;
select one of the second plurality of generated colour values based on the second plurality of colour distances; and
cause the one or more light-emitting elements to emit light having a colour corresponding to the selected one of the plurality of generated colour values and the selected one of the second plurality of generated colour values.

4. The aerosol-generating device as in any one of the preceding claims, wherein the controller (112) is configured to generate each of the plurality of generated colour values within a predetermined colour space.

5. The aerosol-generating device as in claim 4, wherein the predetermined colour space is a red, green, and blue (RGB) colour space.

6. The aerosol-generating device as in claim 4, wherein the predetermined colour space is a subset of a red, green, and blue (RGB) colour space.

7. The aerosol-generating device as in any one of the preceding claims, wherein the colour distance is a Euclidean distance.

8. The aerosol-generating device as in any one of claims 1 to 6, wherein the colour distance is a Hausdorff distance.

9. The aerosol-generating device as in any one of the preceding claims, wherein the colour distance of the selected one of the plurality of generated colour values is a greatest colour distance of the plurality of colour distances.

10. The aerosol-generating device as in any one of the preceding claims, wherein a portion of the housing (104) covers the one or more light-emitting elements (106) and the portion of the housing (104) is transparent.

11. The aerosol-generating device as in any one of the preceding claims, wherein the one or more light-emitting elements (106) comprises one or more light-emitting diodes.

12. The aerosol-generating device as in any one of the preceding claims, wherein the one or more light-emitting elements (106) comprises a display comprising a plurality of pixels.

13. The aerosol-generating device as in claim 12, wherein the controller (112) is further configured to cause the display to display one or more symbols based on the selected one of the plurality of generated colour values.

14. The aerosol-generating device as in claim 13, wherein the one or more symbols comprise one or more words.

15. The aerosol-generating device as in any one of the preceding claims, wherein the heating element (120) is arranged and configured to mate with and heat an aerosol-generating article (122).

**Patentansprüche**

1. Aerosolerzeugungsvorrichtung (102), aufweisend:

   ein Gehäuse (104) mit einem Mundstückelement (116) und einem Lufteinlass (118);
   ein Luftstromkanal (119), der sich innerhalb des Gehäuses zwischen dem Mundstückelement (116) und dem Lufteinlass (118) erstreckt;
   ein Heizelement (120), das innerhalb des Gehäuses (104) befestigt ist;
   einen oder mehrere optische Sensoren (108), die in dem Gehäuse (104) angeordnet sind, um eine Farbe des Umgebungslichts in einer Umgebung zu detektieren, welche die Aerosolerzeugungsvorrichtung (102) umgibt, und um ein Signal bereitzustellen, das die Farbe des Umgebungslichts angibt;
   ein oder mehrere lichtemittierende Elemente (106), die auf oder in dem Gehäuse (104) angeordnet sind, um Licht zu emittieren; und
   eine Steuerung (112) mit einem oder mehreren Prozessoren, die mit dem einen oder den mehreren optischen Sensoren (108) und dem einen oder den mehreren lichtemittierenden Elementen (106) wirkverbunden sind, wobei die Steuerung (112) für Folgendes ausgelegt ist:

      Empfangen des Signals, das die Farbe des Umgebungslichts angibt, von dem einen oder den mehreren optischen Sensoren (108);
      Bestimmen eines Umgebungsfarbwerts, welcher der Farbe des Umgebungslichts entspricht, basierend auf dem Signal, welches die Farbe des Umgebungslichts angibt;
      Erzeugen einer Mehrzahl von erzeugten Farbwerten;
      Bestimmen eines Farbabstands zwischen der Farbe des Umgebungslichts und jedem der Mehrzahl von erzeugten Farbwerten, um mehrere Farbabstände vorzusehen;
      Auswählen eines der Mehrzahl von erzeugten Farbwerten basierend auf der Mehrzahl der Farbabstände; und
      Bewirken, dass das eine oder die mehreren lichtemittierenden Elemente (106) Licht mit einer Farbe emittieren, die dem ausgewählten einen der Mehrzahl von erzeugten Farbwerten entspricht.

2. Aerosolerzeugungsvorrichtung nach Anspruch 1, wobei die Steuerung (112) ausgelegt ist, jeden der Mehrzahl von erzeugten Farbwerten zufällig zu erzeugen.

3. Aerosolerzeugungsvorrichtung nach einem der vorhergehenden Ansprüche, wobei die Steuerung (112) ferner zu Folgendem ausgelegt ist:

   Erzeugen einer zweiten Mehrzahl von erzeugten Farbwerten;
   Bestimmen eines Farbabstands zwischen dem Umgebungsfarbwert und jedem der zweiten Mehrzahl von erzeugten Farbwerten, um eine zweite Mehrzahl von Farbabständen vorzusehen;
   Auswählen eines der zweiten Mehrzahl von erzeugten Farbwerten basierend auf der zweiten Mehrzahl der Farbabstände; und
   Bewirken, dass das eine oder die mehreren lichtemittierenden Elemente Licht mit einer Farbe emittieren, die dem ausgewählten einen der Mehrzahl von erzeugten Farbwerten und dem ausgewählten einen der zweiten Mehrzahl von erzeugten Farbwerte entspricht.

4. Aerosolerzeugungsvorrichtung nach einem der vorhergehenden Ansprüche, wobei die Steuerung (112) ausgelegt ist, jeden der Mehrzahl von erzeugten Farbwerten innerhalb eines vorbestimmten Farbraums zu erzeugen.

5. Aerosolerzeugungsvorrichtung nach Anspruch 4, wobei der vorbestimmte Farbraum ein Rot-, Grün- und Blau(RGB)-Farbraum ist.

6. Aerosolerzeugungsvorrichtung nach Anspruch 4, wobei der vorbestimmte Farbraum eine Teilmenge eines Rot-, Grün- und Blau(RGB)-Farbraums ist.

7. Aerosolerzeugungsvorrichtung nach einem der vorhergehenden Ansprüche, wobei der Farbabstand ein euklidischer Abstand ist.

8. Aerosolerzeugungsvorrichtung nach einem der Ansprüche 1 bis 6, wobei der Farbabstand ein Hausdorff-Abstand ist.

9. Aerosolerzeugungsvorrichtung nach einem der vorhergehenden Ansprüche, wobei der Farbabstand des ausgewählten einen der Mehrzahl von erzeugten Farbwerten der größte Farbabstand aus der Mehrzahl von Farbabständen ist.

10. Aerosolerzeugungsvorrichtung nach einem beliebigen vorhergehenden Anspruch, wobei ein Abschnitt des Gehäuses (104) das eine oder die mehrere lichtemittierenden Elemente (106) bedeckt und der Abschnitt des Gehäuses (104) transparent ist.

11. Aerosolerzeugungsvorrichtung nach einem beliebigen der vorhergehenden Ansprüche, wobei das eine oder die mehrere lichtemittierenden Elemente (106) eine oder mehrere Leuchtdioden umfassen.

12. Aerosolerzeugungsvorrichtung nach einem beliebigen der vorhergehenden Ansprüche, wobei das eine oder die mehrere lichtemittierenden Elemente (106) eine Anzeige mit einer Mehrzahl von Pixeln umfassen.

13. Aerosolerzeugungsvorrichtung nach Anspruch 12, wobei die Steuerung (112) ferner ausgelegt ist, zu bewirken, dass die Anzeige ein oder mehrere Symbole basierend auf dem ausgewählten einen der Mehrzahl von erzeugten Farbwerten anzeigt.

14. Aerosolerzeugungsvorrichtung nach Anspruch 13, wobei das eine oder die mehreren Symbole ein oder mehrere Wörter umfassen.

15. Aerosolerzeugungsvorrichtung nach einem der vorhergehenden Ansprüche, wobei das Heizelement (120) angeordnet und ausgelegt ist, mit einem aerosolerzeugenden Artikel (122) zusammenzupassen und diesen zu erwärmen.

## Revendications

1. Dispositif de génération d'aérosol (102) comprenant :

   un logement (104) ayant un élément d'embout buccal (116) et une entrée d'air (118) ;
   un canal d'écoulement d'air (119) s'étend au sein du logement entre l'élément d'embout buccal (116) et l'entrée d'air (118) ;
   un élément de chauffage (120) fixé au sein du logement (104) ;
   un ou plusieurs capteurs optiques (108) sont disposés dans le logement (104) pour détecter une couleur de la lumière ambiante dans un environnement entourant le dispositif de génération d'aérosol (102) et fournir un signal indicatif de la couleur de la lumière ambiante ;
   un ou plusieurs éléments électroluminescents (106) sont disposés sur ou dans le logement (104) pour émettre de la lumière ; et
   un dispositif de commande (112) comprenant un ou plusieurs processeurs couplés de manière fonctionnelle aux un ou plusieurs capteurs optiques (108) et aux un ou plusieurs éléments électroluminescents (106), le dispositif de commande (112) étant configuré pour :

      recevoir le signal indicatif de la couleur de la lumière ambiante provenant des un ou plusieurs capteurs optiques (108) ;
      déterminer une valeur de couleur ambiante correspondant à la couleur de la lumière ambiante sur la base du signal indicatif de la couleur de la lumière ambiante ;
      générer une pluralité de valeurs de couleur générées ;
      déterminer une distance de couleur entre la couleur de la lumière ambiante et chacune de la pluralité de valeurs de couleur générées pour fournir une pluralité de distances de couleur ;
      sélectionner l'une parmi la pluralité de valeurs de couleur générées sur la base de la pluralité de distances de couleur ; et
      amener les un ou plusieurs éléments électroluminescents (106) à émettre une lumière ayant une couleur correspondant à celle sélectionnée parmi la pluralité de valeurs de couleur générées.

2. Dispositif de génération d'aérosol selon la revendication 1, dans lequel le dispositif de commande (112) est configuré pour générer de manière aléatoire chacune de la pluralité de valeurs de couleur générées.

3. Dispositif de génération d'aérosol selon l'une quelconque des revendications précédentes, dans lequel le dispositif de commande (112) est configuré en outre pour :

génerer une deuxième pluralité de valeurs de couleur générées ;

déterminer une distance de couleur entre la valeur de couleur ambiante et chacune de la deuxième pluralité de valeurs de couleur générées pour fournir une deuxième pluralité de distances de couleur ;

sélectionner l'une parmi la deuxième pluralité de valeurs de couleur générées sur la base de la deuxième pluralité de distances de couleur ; et

amener les un ou plusieurs éléments électroluminescents à émettre une lumière ayant une couleur correspondant à celle sélectionnée parmi la pluralité de valeurs de couleur générées et celle sélectionnée parmi la deuxième pluralité de valeurs de couleur générées.

4. Dispositif de génération d'aérosol selon l'une quelconque des revendications précédentes, dans lequel le dispositif de commande (112) est configuré pour générer chacune de la pluralité de valeurs de couleur générées dans un espace chromatique prédéterminé.

5. Dispositif de génération d'aérosol selon la revendication 4, dans lequel l'espace chromatique prédéterminé est un espace chromatique rouge, vert et bleu (RVB).

6. Dispositif de génération d'aérosol selon la revendication 4, dans lequel l'espace chromatique prédéterminé est un sous-ensemble d'un espace chromatique rouge, vert et bleu (RVB).

7. Dispositif de génération d'aérosol selon l'une quelconque des revendications précédentes, dans lequel la distance de couleur est une distance euclidienne.

8. Dispositif de génération d'aérosol selon l'une quelconque des revendications 1 à 6, dans lequel la distance de couleur est une distance de Hausdorff.

9. Dispositif de génération d'aérosol selon l'une quelconque des revendications précédentes, dans lequel la distance de couleur de celle sélectionnée parmi la pluralité de valeurs de couleur générées est la plus grande distance de couleur parmi la pluralité de distances de couleur.

10. Dispositif de génération d'aérosol selon l'une quelconque des revendications précédentes, dans lequel une portion du logement (104) couvre les un ou plusieurs éléments électroluminescents (106) et la portion du logement (104) est transparente.

11. Dispositif de génération d'aérosol selon l'une quelconque des revendications précédentes, dans lequel les un ou plusieurs éléments électroluminescents (106) comprennent une ou plusieurs diodes électroluminescentes.

12. Dispositif de génération d'aérosol selon l'une quelconque des revendications précédentes, dans lequel les un ou plusieurs éléments électroluminescents (106) comprennent un affichage comprenant une pluralité de pixels.

13. Dispositif de génération d'aérosol selon la revendication 12, dans lequel le dispositif de commande (112) est en outre configuré pour amener l'affichage à afficher un ou plusieurs symboles sur la base de celle sélectionnée parmi la pluralité de valeurs de couleur générées.

14. Dispositif de génération d'aérosol selon la revendication 13, dans lequel les un ou plusieurs symboles comprennent un ou plusieurs mots.

15. Dispositif de génération d'aérosol selon l'une quelconque des revendications précédentes, dans lequel l'élément de chauffage (120) est agencé et configuré pour s'accoupler avec un article de génération d'aérosol (122) et le chauffer.

# Fig. 1

Fig. 2

# Fig. 3

100

EP 4 521 973 B1

**102**

**106**

**108**

**110**

**112**

**114**

**140**

**144**

**146**

**148**

**150**

**152**

**160**

**162**

**164**

**166**

**168**

**170**

# Fig. 4

200

202

204

206

208

210

212

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 2020194112 A1